**Europäisches Patentamt**

(19) **European Patent Office**

**Office européen des brevets**

(11) Veröffentlichungsnummer: **0 054 125**
**A1**

(12) # EUROPÄISCHE PATENTANMELDUNG

(21) Anmeldenummer: **81108460.7**

(22) Anmeldetag: **17.10.81**

(51) Int. Cl.³: **C 03 B 37/08**
C 03 B 37/09, C 03 B 7/02
C 03 B 7/08

(30) Priorität: **24.03.81 DE 3111484**

(43) Veröffentlichungstag der Anmeldung:
**23.06.82 Patentblatt 82/25**

(84) Benannte Vertragsstaaten:
**BE FR GB IT**

(71) Anmelder: **Böttger, Diether**
**Stettiner Strasse 19**
**D-6203 Hochheim(DE)**

(72) Erfinder: **Böttger, Diether**
**Stettiner Strasse 19**
**D-6203 Hochheim(DE)**

(74) Vertreter: **Funck-Hartherz, Anna-Eleonore, Dipl.-Phys.**
**Hoherodskopfstrasse 41**
**D-6000 Frankfurt (Main) 50(DE)**

(54) Verfahren und Vorrichtung zur Herstellung von Glasfasern.

(57) Die Erfindung bezieht sich auf ein Verfahren und eine Vorrichtung zur Herstellung von Glasfasern, insbesondere Glasfasern, die zur Bewehrung von Kunststoffen verwendet werden. Es ist Aufgabe der Erfindung, ein Verfahren und eine Vorrichtung vorzuschlagen, mittels deren die Durchflußrate erhöht, die Qualität der Fasern optimiert sowie die Nachverarbeitungsverfahren weiter reduziert bzw. eliminiert werden können.

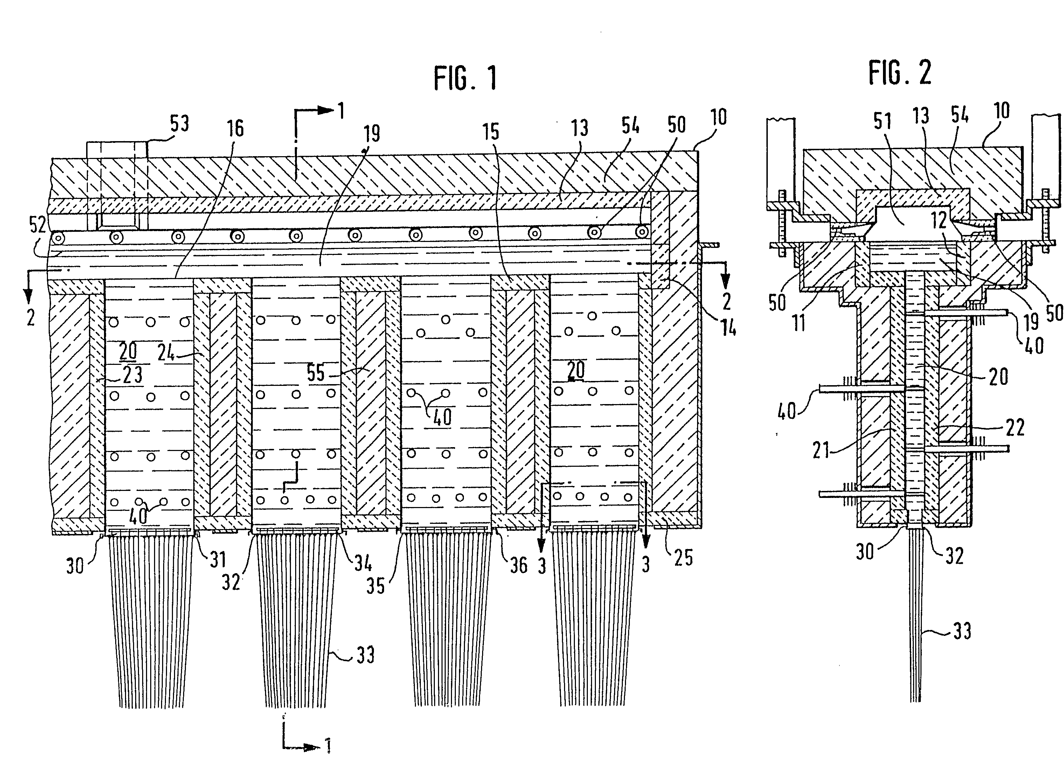

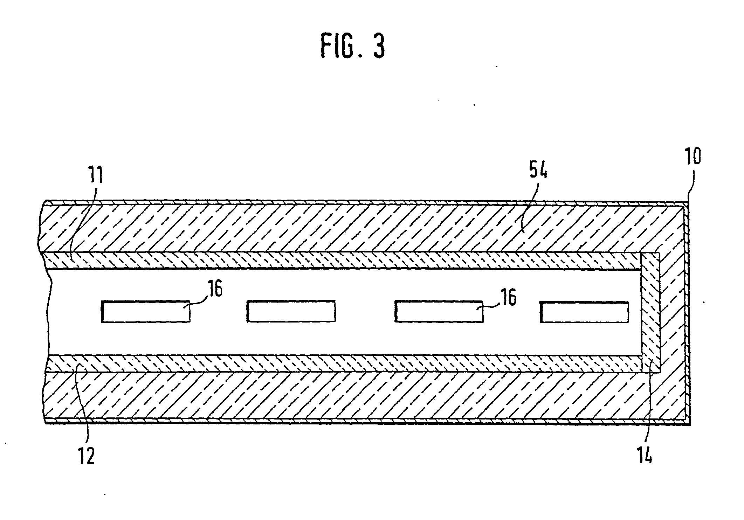

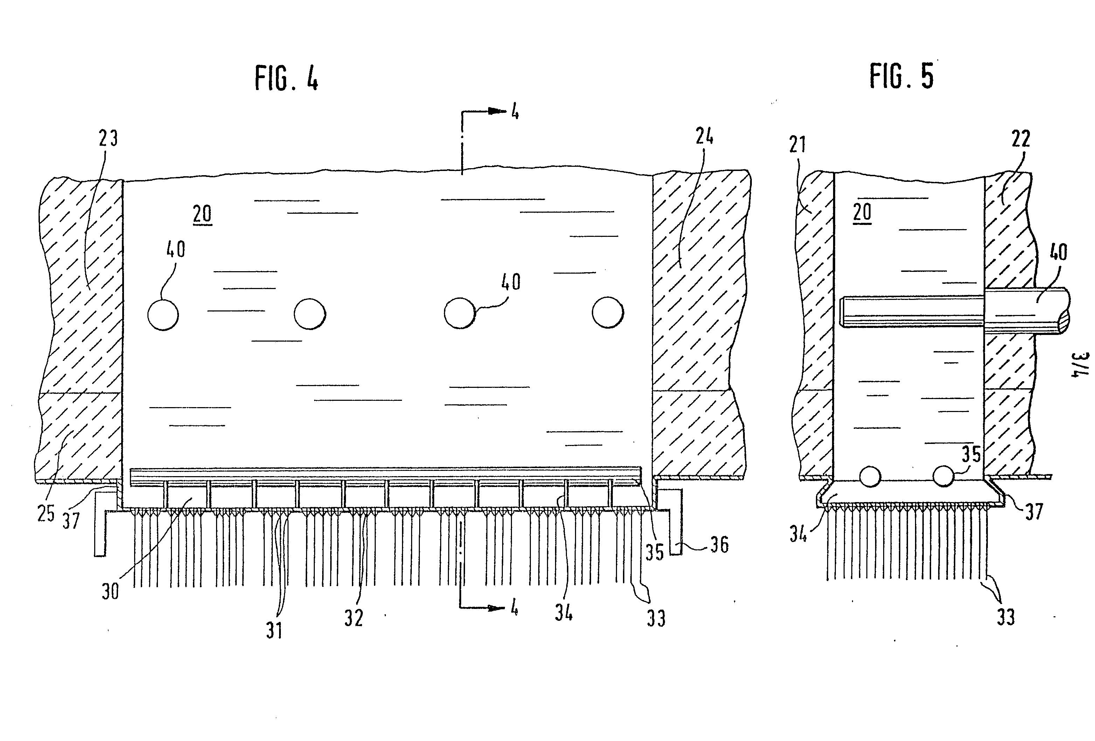

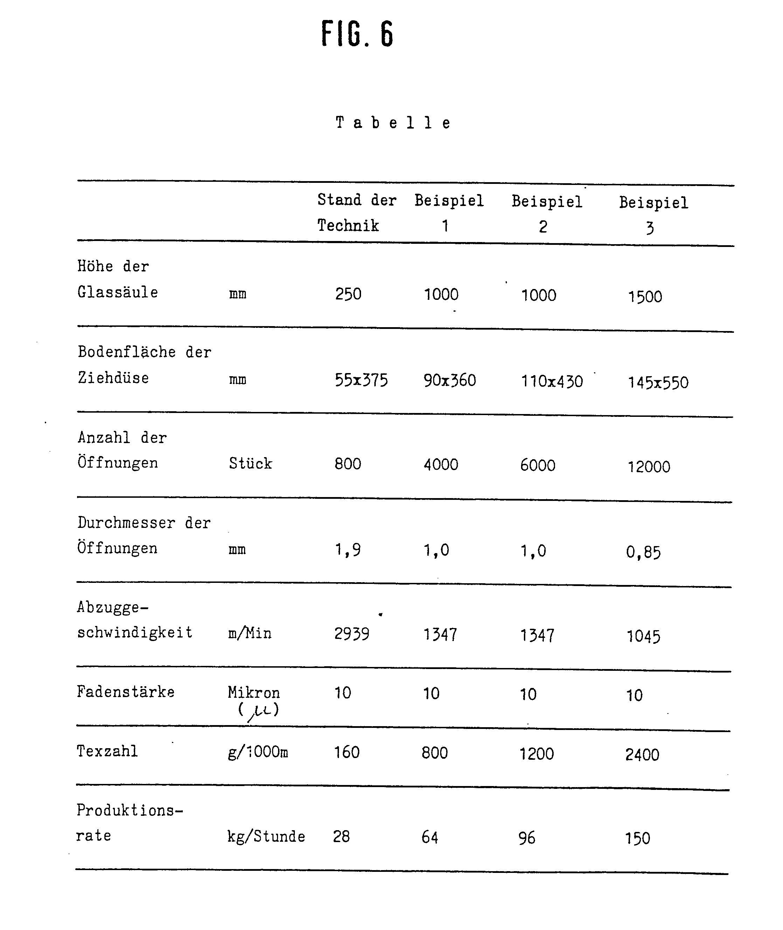

Gemäß dem erfindungsgemäßen Verfahren wird das geschmolzene Glas von der Vorkammer (10) über wenigstens eine im Boden der Vorkammer (10) befindliche Öffnung (16) in eine vertikale, sich nach unten erstreckende Zwischenkammer (20) geleitet, das Glas in dieser Zwischenkammer (20) durch Durchleiten von Strom homogen beheizt. Außerdem erhält es dann einen laminaren Strömungsverlauf aufgezwungen, wird geläutert und von dieser Zwischenkammer (20) unmittelbar der Düsenplatte (30) zugeführt. Die dazugehörige Vorrichtung ist so beschaffen, daß zwischen der Vorkammer (10) und der Düsenplatte (30) eine Zwischenkammer (20) vorgesehen ist (Fig. 1), wobei die Höhe der Zwischenkammer (20) vorzugsweise größer als deren Länge - in Längsrichtung der Vorkammer (10) gesehen - bzw. deren Durchmesser ist.

./...

FIG. 1

Frankfurt (Main), den 30.9.1981
P 81/1410 eu

Diether Böttger
Stettiner Str. 19
6203 Hochheim

---

Verfahren und Vorrichtung zur Herstellung von Glasfasern

---

Die Erfindung bezieht sich auf ein Verfahren und eine Vorrichtung zur Herstellung von Glasfasern, insbesondere
Glasfasern, die zur Bewehrung von Kunststoffen verwendet
werden. Vorrichtungen zur Herstellung von Glasfasern, bei
denen in der Vorkammer oberhalb der zuvor im Schmelzofen
fließfähig gemachten Glasmasse Brenner vorgesehen sind,
die mit bekannten Heizmaterialien gespeist werden, und

- 2 -

die die Glasmasse auf die zur Faserherstellung notwendige
Temperatur bringen, sind bekannt. In der DT-AS 11 58 671
ist eine solche zum Stand der Technik gehörende Einrichtung beschrieben.

Die bekannten Vorrichtungen haben den Nachteil, daß in
der Vorkammer nur mit einer Glasmassesäule von 200 -
250 mm über der beheizten Ziehdüsenplatte gearbeitet
werden kann.

Bekannte Ziehdüsenplatten für vorgenannte Vorrichtungen
bestehen beispielsweise aus einem trogförmigen Gefäß aus
einer Platinlegierung, das am Boden mit Düsen bzw. Düsenspitzen versehen ist, aus denen dann das geschmolzene Glas
austreten kann. Die Ziehdüsenplatten werden dabei als
Widerstand in einen Niederspannungsstromkreis eingeschaltet und auf diese Weise elektrisch beheizt. Neben dem
großen Vorteil dieser elektrischen Heizung zeigt sich
auch ein erheblicher Nachteil, der darin besteht, daß
eine Temperaturinhomogenität bewirkt wird, da die Temperatur der Trogwände einen Temperaturgradienten aufweist,
der nach oben hin abfällt und wobei die Trogwände kurz
oberhalb des Trogbodens die größte Temperatur aufweisen.
Infolge der ungleichmäßigen Heiztemperatur kommt es zu
zusätzlichen Turbulenzen der Glasmassen, was häufige
Fadenbrüche und die Bildung ungleichmäßiger Fadendurchmesser zur Folge hat.

Es ist bekannt, daß die Glasmasse in der Vorkammer mit
den bereits erwähnten Brennern auf mindestens 1.350°C
erhitzt werden muß, um an den Ziehdüsen eine brauchbare
Arbeitstemperatur von 1.240°C zu erhalten. Diese Daten
begrenzen die Höhe der Glassäule oberhalb der Ziehdüsen
auf 250 mm, da andernfalls die Temperatur der Glasmasse
ein zu starkes Gefälle aufweist. Darüber hinaus ist es
durch die HAGEN-POISEUILLE'sche Gleichung bekannt, daß
eine höhere Glassäule und damit ein höherer hydrostatischer Druck über der beheizten Ziehdüsenplatte eine
erhöhte Durchflußrate und damit Effizienz der Vorrichtung
bewirkt. Die HAGEN-POISEUILLE'sche Gleichung lautet

$$Q \quad \frac{K\ H\ D^4\ N}{v\ L}$$

worin: Q  Durchflußrate, auf die Zeiteinheit bezogen

K  Konstante

H  Stand der Glasmasse oberhalb der Ziehdüsenplatte

D  Durchmesser der Düsenspitze

N  Anzahl der Öffnungen der Ziehdüsenplatte

v  Viskosität

L  Länge der Düsenspitze.

Die Erfindung hat sich nun die Aufgabe gesetzt, ein Verfahren und eine Vorrichtung vorzuschlagen, mittels deren
die Durchflußrate erhöht, die Qualität der Fasern optimiert sowie die Nachverarbeitungsverfahren weiter reduziert bzw. eliminiert werden können. Unter gewissen Voraussetzungen lassen sich sogar Direkt-Roving-Stränge produzieren. Zur Lösung dieser Aufgabe geht die Erfindung von einer Vorrichtung zur Glasfaserherstellung mit einer beheizten Vorkammer für das geschmolzene Glas mit wenigstens einer Durchtrittsöffnung zur beheizten Ziehdüsenplatte aus. Die Beheizung der Vorkammer mit der darin befindlichen Glasmasse kann von oben durch die vorerwähnten Brenner erfolgen und/oder durch in der Vorkammer angeordnete Elektroden, die an einer Stromquelle angeschlossen sind.

Die Erfindung schlägt ein Herstellungsverfahren vor, wonach das geschmolzene Glas von der Vorkammer über wenigstens eine im Boden der Vorkammer befindliche Öffnung in eine vertikale, sich nach unten erstreckende Zwischenkammer geleitet wird, das Glas in dieser Zwischenkammer durch Durchleiten von Strom homogen beheizt wird, einen laminaren Strömungsverlauf aufgezwungen erhält sowie geläutert und von der Zwischenkammer unmittelbar unter Beibehaltung des laminaren Strömungsverlaufs der Düsenplatte zugeführt wird.

Die erfindungsgemäße Vorrichtung zur Durchführung dieses Verfahrens ist dadurch gekennzeichnet, daß zwischen der Vorkammer, in die die vom Schmelzofen fließfähig gemachte Glasmasse eintritt, und der Düsenplatte eine Zwischenkammer vorgesehen ist. Die zur Zwischenkammer führenden Durchtrittsöffnungen im Boden der Vorkammer können dem Querschnitt der Zwischenkammer entsprechen oder aber jede andere strömungstechnisch geeignete Form aufweisen. Die Höhe dieser Zwischenkammer ist auf alle Fälle größer als deren Länge - in Längsrichtung der Vorkammer gesehen - bzw. deren Durchmesser. Es ist davon auszugehen, daß die Höhe etwa das 2- bis 3-fache der Länge der Kammer beträgt. Diese Zwischenkammer kann im Querschnitt die Form eines rechteckigen Parallelogrammes aufweisen oder im Querschnitt rund oder oval sein.

Zur Beheizung dieser Zwischenkammer ist diese mit Elektroden, die mit einer Stromquelle verbunden sind, durchsetzt. Diese Elektroden können horizontal oder vertikal in der Kammer angeordnet sein und können von einer oder mehreren Seiten durch die Kammerwände in die Zwischenkammer eingreifen. Abhängig von der Form der Zwischenkammer und der Durchlaufgeschwindigkeit der Glasmasse können die Elektroden nebeneinander, übereinander und/oder versetzt zueinander angeordnet sein.

Die Tatsache, daß die geschmolzene Glasmasse von der Vorkammer bis zur Düsenplatte eine Zwischenkammer von homogener Innentemperatur durchlaufen muß, die eine Höhe von beispielsweise 2.000 mm haben kann, bewirkt durch den im Vergleich mit den bekannten Vorrichtungen größeren hydrostatischen Druck auch eine größere Durchflußrate sowie
eine bessere Faserqualität, da innerhalb der Zwischenkammer eine intensive Läuterung der Glasmasse vorgenommen
werden kann.

Durch die Verwendung von Elektroden zur Beheizung der in
der Zwischenkammer befindlichen Glasmasse wird eine homogene Temperaturverteilung erreicht. Bei einer vertikal
verlaufenden Zwischenkammer sind die Elektroden horizontal
installiert und in der Regel in mehreren Gruppen übereinander angeordnet. Diese Elektroden unterteilen die Glasmasse in Temperaturregelzonen, das sind die Abstände
zwischen je zwei Elektroden, und sorgen auf diese Weise
für eine Temperaturhomogenität in der Zwischenkammer. Die
Elektroden sind vorzugsweise im oberen Teil der Zwischenkammer in einem größeren Abstand angeordnet als in dem
unteren Teil - kurz, über der beheizten Ziehdüsenplatte -
um an dieser Stelle eine größere Beeinflussung auf die
beheizte Ziehdüsenplatte ausüben zu können.

Die Elektroden bestehen vorzugsweise aus Molybdän in einer
Stärke von 5 - 10 mm. Solche Elektroden können je nach
Einsatzort eine Wasserkühlung oder einen Rippenkühlkörper
besitzen und gehören zum Stand der Technik.

Ein weiterer Vorteil der erfindungsgemäßen Vorrichtung besteht darin, daß Temperaturschwankungen und Temperaturstürze der Glasmasse oberhalb der Zwischenkammer kompensiert werden können und negative Einflüsse infolge Temperaturdifferenzen durch die erwähnte Vorkammer (Brennerheizung) in der Zwischenkammer beseitigt werden können. Die erfindungsgemäße Vorrichtung arbeitet oberhalb der beheizten Ziehdüsenplatte im Zwischenkanal mit einem größeren Glasvolumen als bei den bisher bekannten Vorrichtungen. Durch dieses große Glasvolumen wird eine lange Verweilzeit der Glasmasse in der Zwischenkammer erreicht, was den Vorteil hat, daß ein weiterer Zeitraum für das Austreten von Gasen aus dem Glas zur Verfügung steht, ohne daß das Austreten von Gasen in den mit der Atmosphäre verbundenen Raum oberhalb der Glasmasse behindert wird.

Durch die erfindungsgemäße Schaffung einer Zwischenkammer wird eine Zone geschaffen, die zu einer vertikalen laminaren Strömung ohne Turbulenzen bis zum Ausziehbereich zwingt.

Noch zu erwähnen ist die Tatsache, daß durch die homogene Beheizung der Glassäule über der Ziehdüsenplatte und der Erhöhung des hydrostatischen Druckes erreicht wird, daß der Durchmesser der einzelnen Düsen verringert werden kann, was zu feineren Glasfasern und somit zu einem leichteren Ausziehen der Fäden führt, wodurch die Fadenbruchrate um ein Erhebliches verringert wird.

Wie schon ausgeführt, wird die Durchflußrate bei der
Vorrichtung gemäß der Erfindung erheblich vergrößert
und darüber hinaus durch den erhöhten Druck die Bildung
eines Tropfens an den Düsenspitzen in einer geringeren
Zeitspanne erzeugt und damit die Anlaufzeit der Produktion
bei unveränderten anderen Bedingungen weiter herabgesetzt.
Es hat sich gezeigt, daß bei der Vorrichtung gemäß der
Erfindung die Düsenplatte nur mit einem niedrigen umlaufenden Rand ausgestattet werden kann. Infolge dieser
Maßnahme wird die elektrische Niederspannungsheizung der
Ziehdüsenplatte gezwungen, durch den Boden zu gehen und
diesen zu beheizen, um damit Wärmeverluste an dem Boden
der Ziehdüsenplatte auszugleichen.

Ein weiterer Vorteil der erfindungsgemäßen Vorrichtung
liegt darin, daß durch die Vergrößerung des auf der Ziehdüsenplatte lastenden Druckes die Düsenspitzen im Bodenteil erheblich verkleinert werden können, so daß auf der
Bodenfläche einer Ziehdüsenplatte von 90 auf 360 mm insgesamt 4.000 Öffnungen angebracht werden können. Auf einer
Bodenplatte von 145 auf 550 mm haben dementsprechend
12.000 Öffnungen Platz. Daraus resultiert, daß Direkt-
Roving-Stränge von 2.400 tex produziert werden und Nachverarbeitungsoperationen eliminiert werden können. Bei
Ziehdüsenplatten mit 4.000, 12.000 Bohrungen können bei
geringer Abzuggeschwindigkeit auch Fäden von 9 bis 10
Mikron produziert werden. Eine solche Produktion konnte bisher bei allen beschriebenen Ziehdüsen, die über eine
Öffnungszahl von 4.000 verfügen, bisher noch nicht erreicht werden.

Erwähnenswert ist ferner noch, daß die Trennzeit bei
einem Fadenbruch und die Wiederaufnahme der Produktion
wesentlich herabgesetzt und somit wirtschaftlicher als
bei den bekannten Vorrichtungen ist.

Zum Schutz gegen ein Durchhängen oder Verwerfen der beheizten Ziehdüsenplatte sind an dieser Verstrebungen
vorgesehen.

Eine mögliche Ausführung der erfindungsgemäßen Vorrichtung
ist in der Zeichnung dargestellt und wird anhand dieser
beschrieben. Dabei zeigen

    Fig.   I    einen Längsschnitt durch eine Vorrichtung
                   gemäß der Erfindung,
    Fig. II    einen Querschnitt gemäß 1 - 1 der Fig. I,
    Fig.III   einen Querschnitt gemäß 2 - 2 der Fig. I,
    Fig. IV   einen Längsschnitt gemäß 3 - 3 der Fig. I,
    Fig.  V    einen Querschnitt gemäß 4 - 4 der Fig. IV,
    Fig. VI   eine Tabelle mit Vergleichswerten.

Die geschmolzene Glasmasse wird von einem nicht dargestellten Schmelzofen über einen ebenfalls nicht gezeigten Verbindungskanal in mehrere rechteckige Vorkammern geleitet, wovon eine dargestellt und mit dem Bezugszeichen
10 in den Figuren I, II, III versehen ist.

Die Vorkammer 10 besteht aus Seitenwänden 11, 12, einem
Deckel 13, einer hinteren Stirnseite 14 sowie einem Boden
15. Der Innenraum ist mit dem Bezugszeichen 19 bezeichnet. Die Glasmasse füllt den Innenraum 19 der Vorkammer
10 nicht vollständig aus, sondern beläßt ein Luftpolster
51. Dieses Luftpolster 51 ist über den Abzug 53 mit der
Atmosphäre verbunden. Die herkömmlichen Brenner 50 befinden sich in dem Raum des Luftpolsters oberhalb der
Glasmasse, deren Oberfläche mit 52 gekennzeichnet ist,
im Innenraum 19 der Vorkammer 10.

Der Boden jeder Vorkammer 10 weist in Längsrichtung im
Abstand voneinander angeordnete, im Querschnitt der Form
rechtwinkeliger Parallelogramme entsprechende Öffnungen
16 auf, die den Innenraum 19 der Vorkammer 10 mit den
Zwischenkammern 20 verbunden. Die Öffnung 16 hat in der
gezeigten Ausführung den Querschnitt der Zwischenkammer 20.
Dies muß nicht sein, sondern diese Öffnung kann auch jede
andere strömungstechnisch geeignete Form aufweisen. In der
gezeigten Ausführung weist die Zwischenkammer 20 im Querschnitt die Form eines rechteckigen Parallelogrammes auf,
jedoch kann die Zwischenkammer auch im Querschnitt rund
sein. Die Höhe der Zwischenkammer 20 ist bei der bevor-

zugten Ausführung größer als deren Länge - in Längsrichtung der Vorkammer 10 gesehen - bzw. deren Durchmesser bemessen. Gegebenenfalls ist der Öffnungsrand zum Schutz gegen Korrosionen mit einem Platinblech von geringer Wandstärke ausgekleidet. Die Durchtrittsöffnungen in die Zwischenkammer 20 sind in dem Boden der Vorkammer so eingelassen, daß die geschmolzene Glasmasse aus dem Innenraum 19 der Vorkammer direkt und strömungsgünstig in die Zwischenkammern eintreten kann. Die zwischen Vorkammer 10 und Ziehdüsenplatten 30 befindlichen Zwischenkammern 20 sind mit Seitenwänden 21, 22 sowie Stirnwänden 23, 24 und einem Boden 25 versehen.

Die erfindungsgemäße Zwischenkammer 20 wird durch Elektroden 40 beheizt, die mit einer elektrischen Stromquelle verbunden sind. Bei der dargestellten Ausführung durchsetzen die Elektroden 40 die Seitenwände 21, 22 und greifen so in die geschmolzene Glasmasse ein. Die Elektroden 40 sind horizontal in den Zwischenkammern angeordnet. Eine vertikale Anordnung ist ebenfalls möglich. Wesentlich ist, daß die Elektroden 40 stets so angeordnet sind, daß sie in die geschmolzene Glasmasse vollständig eintauchen. Für einen entsprechenden Glasfluß von dem Schmelzofen über den Verbindungskanal her ist entsprechend Sorge zu tragen. Die Elektroden sind gruppenweise nebeneinander, übereinander und/oder versetzt zueinander angeordnet und bilden zwischen sich zwei, drei oder auch mehr Temperaturregelzonen, wobei unter Zone der horizontale bzw. vertikale
Abstand zwischen zwei Elektroden verstanden wird. Vorzugsweise ist nächst der Ziehdüsenplatte 30 eine Elektrodengruppe angeordnet und zweckmäßigerweise etwas stärker bestückt, um die einzelnen Zonen nächst der Ziehdüsenplatte
30 der Temperatur an der Düsenplatte angleichen zu können.
Durch diese Maßnahme gelangt die Glasmasse ohne Turbulenzen
an die beheizte Ziehdüsenplatte 30.

Die Zwischenkammer 20 wird an ihrem Ende von der Ziehdüsenplatte 30 abgeschlossen. Jede Ziehdüsenplatte ist
mit Öffnungen 31 versehen, die zur Aufrechterhaltung
eines stabilen Ziehprozesses mit Düsenspitzen 32 versehen sind, deren Enden als Ablaufkanten ausgeführt sind.
Die Ziehdüsenplatte weist 4000, 12000 oder mehr Öffnungen
auf. Die Glasmasse tritt aus den Düsenspitzen 32 aus und
bildet, indem das Glas durch eine geeignete Ziehvorrichtung
abgezogen wird, die Glasfasern 33, die dann auf eine nicht
dargestellte Rolle aufgewickelt werden.

Infolge des bei der erfindungsgemäßen Vorrichtung auf der
Ziehdüsenplatte 30 lastenden großen Druckes ist es, um
ein Durchsacken oder Verwerfen des Bodens der Ziehdüsenplatte 30 zu vermeiden, notwendig, die Ziehdüsenplatte
30 zu verstreben. Dazu ist der Boden der Ziehdüsenplatte

30 mit parallel zueinander, jeweils bis zu dem Rand 37
geführten Blechen 34 verstrebt, die ihrerseits mit quer
dazu sich erstreckenden Stangen 35 verbunden sind. (Siehe
Fig. IV, Fig. V) An dem erfindungsgemäß niedrig gehaltenen Rand 37 der Ziehdüsenplatte 30 befinden sich Elektroanschlüsse 36. Infolge des niedrig gehaltenen Randes beheizt der elektrische Strom homogen die Bodenplatte, und
nur ein geringer Teil wird zur Beheizung des Randes der
Ziehdüsenplatte verbraucht.

Die Isolierung der Vorkammer 10 ist mit dem Bezugszeichen
54, die der Zwischenkammer 20 mit dem Bezugszeichen 55
versehen.

Die Elektroden 40 werden von einer nicht dargestellten
Stromquelle, vorzugsweise einer Drei-Phasen-Wechselstromquelle gespeist. Der Strom wird über einen Transformator und eine Steuerschaltung an die Elektroden abgegeben. Die Steuerschaltung kann so gewählt werden, daß den
einzelnen Elektroden unterschiedliche Leistung zugeführt
wird und damit unterschiedliche Temperaturen des Glases
innerhalb der Zwischenkammer ausgeglichen werden können.
Derartige Steuerschaltungen sind an sich bekannt.

In Fig. VI ist eine Tabelle gezeigt, die einen Vergleich
zwischen den Vorrichtungen gemäß dem Stand der Technik
und dem Verfahren bzw. der Vorrichtung gemäß der Erfin-

- 14 -

dung zeigt. Die dort niedergelegten Beispiele 1, 2 und 3 unterscheiden sich in der Höhe der Glassäule sowie der Anzahl der Öffnungen der Ziehdüsenplatte. Aus dieser Tabelle ist ohne weiteres ersichtlich, daß die Produktionsrate mit der Vorrichtung gemäß der Erfindung wesentlich vergrößert wird und sich die notwendige Abzugsgeschwindigkeit um ein Wesentliches verringert.

Infolge der großen Verweilzeit der Glasmasse in der Vorkammer und der Zwischenkammer werden die Bedingungen des Glases durch eine intensive, bei keiner der bekannten Ausführungen vorhandene Möglichkeit einer Läuterung, so daß die Glasmasse selbst für die Herstellung von feinsten Glasfasern geeignet ist, verbessert. Die mit der erfindungsgemäßen Vorrichtung erreichte Homogenität der Glasmasse im Bereich der Ziehdüsenplatte gewährleistet eine hervorragende Qualität der Glasfasern, die eine Fadenbruchgefahr weitgehend eliminiert.

- Patentansprüche -

Patentansprüche

1.) Verfahren zur Herstellung von Glasfasern, insbesondere Glasfasern zur Bewehrung von Kunststoffen
mit einer beheizten Vorkammer für das geschmolzene
Glas von hochspezifischem Widerstand mit wenigstens
einer Ziehdüsenplatte,
d a d u r c h   g e k e n n z e i c h n e t ,
daß das geschmolzene Glas von der Vorkammer (10)
über wenigstens eine im Boden der Vorkammer befindliche Öffnung (16) in eine vertikale sich nach unten
erstreckende Zwischenkammer (20) geleitet wird, daß
Glas in dieser Zwischenkammer (20) durch Durchleiten
von Strom homogen beheizt wird, einen laminaren
Strömungsverlauf aufgezwungen erhält sowie geläutert
und von der Zwischenkammer (20) unmittelbar unter
Beibehaltung des laminaren Strömungsverlaufs der
Düsenplatte (30) zugeführt wird.

2.) Vorrichtung zur Durchführung des Verfahrens
nach Anspruch 1,
d a d u r c h   g e k e n n z e i c h n e t ,
daß zwischen der Vorkammer (10) und der Düsenplatte
(30) eine Zwischenkammer (20) vorgesehen ist.

3.) Vorrichtung nach Anspruch 2,

   d a d u r c h   g e k e n n z e i c h n e t ,

   daß die zur Zwischenkammer (20) führenden Durchtrittsöffnungen (16) im Boden (15) der Vorkammer dem Querschnitt der Zwischenkammer (20) entsprechen oder
   jede andere strömungstechnisch geeignete Form aufweisen.

4.) Vorrichtung nach Anspruch 2,

   d a d u r c h   g e k e n n z e i c h n e t ,

   daß die Höhe der Zwischenkammer (20) größer als
   deren Länge - in Längsrichtung der Vorkammer (10)
   gesehen - bzw. deren Durchmesser ist.

5.) Vorrichtung nach Anspruch 2, 3 oder 4,

   d a d u r c h   g e k e n n z e i c h n e t ,

   daß die Zwischenkammer im Querschnitt die Form
   eines rechteckigen Parallelogrammes aufweist.

6.) Vorrichtung nach den Ansprüchen 2, 3 oder 4,

   d a d u r c h   g e k e n n z e i c h n e t ,

   daß die Zwischenkammer (20) im Querschnitt rund
   oder oval ist.

7.) Vorrichtung nach einem der vorhergehenden
   Ansprüche  2 - 6,

   d a d u r c h   g e k e n n z e i c h n e t

daß die Zwischenkammer (20) mit Elektroden (40), die mit einer Stromquelle verbunden sind, durchsetzt ist.

8.) Vorrichtung nach Anspruch 7,
d a d u r c h   g e k e n n z e i c h n e t ,
daß die Elektroden (40) von einer oder mehreren Seiten durch die Kammerwände (21, 22, 23, 24) in die Zwischenkammer (20) eingreifen.

9.) Vorrichtung nach Anspruch 7,
d a d u r c h   g e k e n n z e i c h n e t ,
daß die Elektroden nebeneinander, übereinander und/oder versetzt zueinander angeordnet sind.

10.) Vorrichtung nach Anspruch 7 oder 9,
d a d u r c h   g e k e n n z e i c h n e t ,
daß die Elektroden (40) horizontal oder vertikal in der Zwischenkammer (20) angeordnet sind.

11.) Vorrichtung nach Anspruch 7,
d a d u r c h   g e k e n n z e i c h n e t ,
daß Elektroden (40) nächst der Ziehdüsenplatte (30) vorgesehen sind.

12.) Vorrichtung nach Anspruch 7,
d a d u r c h   g e k e n n z e i c h n e t ,
daß der Boden der Ziehdüsenplatte (30) nur einen niedrigen umlaufenden Rand (37) aufweist.

13.) Vorrichtung nach Anspruch 12,
d a d u r c h   g e k e n n z e i c h n e t ,
daß der Boden der Ziehdüsenplatte (30) mit parallel
zueinander bis zu den Rändern verlaufenden Blechen
(34) verstrebt ist, die ihrerseits mit quer dazu
sich erstreckenden Stangen (35) verbunden sind.

14.) Vorrichtung nach Anspruch 12,
d a d u r c h   g e k e n n z e i c h n e t ,
daß die Ziehdüsenplatte 4.000, 12.000 oder mehr
Öffnungen, deren Enden als Ablaufkanten ausgeführt
sind, enthält.

FIG. 1

FIG. 2

FIG. 3

FIG. 4

FIG. 5

3/4

0054125

# FIG. 6

Tabelle

| | | Stand der Technik | Beispiel 1 | Beispiel 2 | Beispiel 3 |
|---|---|---|---|---|---|
| Höhe der Glassäule | mm | 250 | 1000 | 1000 | 1500 |
| Bodenfläche der Ziehdüse | mm | 55x375 | 90x360 | 110x430 | 145x550 |
| Anzahl der Öffnungen | Stück | 800 | 4000 | 6000 | 12000 |
| Durchmesser der Öffnungen | mm | 1,9 | 1,0 | 1,0 | 0,85 |
| Abzugge-schwindigkeit | m/Min | 2939 | 1347 | 1347 | 1045 |
| Fadenstärke | Mikron ($\mu$) | 10 | 10 | 10 | 10 |
| Texzahl | g/1000m | 160 | 800 | 1200 | 2400 |
| Produktions-rate | kg/Stunde | 28 | 64 | 96 | 150 |

# EUROPÄISCHER RECHERCHENBERICHT

**0054125**

Europäisches Patentamt

Nummer der Anmeldung

**EP 81 10 8460**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X,Y | US - A - 3 416 906 (GLASER)<br><br>* das ganze Dokument *<br><br>& DE - A - 1 596 553<br><br>-- | 1,2,3,5 |
| X,Y | US - A - 3 988 135 (COGGIN)<br><br>* das ganze Dokument *<br><br>& DE - A - 2 634 281<br><br>-- | 1,2,3,13,14 |
| X | DE - C - 834 585 (GRUNZWEIG & HARTMANN)<br><br>* das ganze Dokument *<br><br>-- | 1,2 |
| X | FR - A - 2 257 552 (STRICKLAND)<br><br>* Figuren 1-3; Seiten 18-20 *<br><br>& DE - A - 2 501 216<br>DE - A - 2 420 650<br><br>-- | 1,2,3,5,6,13,14 |
| Y | US - A - 4 178 162 (SHONO)<br><br>* das ganze Dokument *<br><br>& DE - A - 2 729 860<br><br>---------- | 13,14 |

**KLASSIFIKATION DER ANMELDUNG (Int Cl.³)**

C 03 B 37/08
37/09
7/02
7/08

**RECHERCHIERTE SACHGEBIETE (Int. Cl.³)**

C 03 B 37/00
7/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 07-04-1982 | VAN DEN BOSSCHE |

EPA form 1503.1  06.78